Europäisches Patentamt

European Patent Office

Office européen des brevets

(19)

(11) Veröffentlichungsnummer: **0 379 602 B1**

(12) **EUROPÄISCHE PATENTSCHRIFT**

(45) Veröffentlichungstag der Patentschrift: **01.12.93**

(51) Int. Cl.⁵: **B65B 39/02**, B65G 47/19

(21) Anmeldenummer: **89101067.0**

(22) Anmeldetag: **21.01.89**

(54) **Absack- oder Schlauchfolienfüllvorrichtung.**

(43) Veröffentlichungstag der Anmeldung:
**01.08.90 Patentblatt 90/31**

(45) Bekanntmachung des Hinweises auf die
Patenterteilung:
**01.12.93 Patentblatt 93/48**

(84) Benannte Vertragsstaaten:
**DE ES FR IT NL**

(56) Entgegenhaltungen:
**BE-A- 507 980**
**FR-A- 2 121 596**
**LU-A- 68 531**
**US-A- 3 204 670**

(73) Patentinhaber: **Librawerk Maschinenfabrik
GmbH
Vossenkamp 1
38104 Braunschweig(DE)**

(72) Erfinder: **Droste, Hans Joachim,
Hedwigstrasse 5,
D-3300 Braunschweig,(DE)**
Erfinder: **Görlitz, Frank-Otto,
Olbrichtstrasse 1 B,
D-3300 Braunschweig,(DE)**

(74) Vertreter: **Einsel, Martin et al
Dr.R. Döring, Dr.J. Fricke, M.Einsel, R. Leonhard
Jasperallee 1a
D-38102 Braunschweig (DE)**

## Beschreibung

Die Erfindung betrifft eine Absack- oder Schlauchfolienfüllvorrichtung für rieselfähiges Gut, insbesondere zum Abfüllen in Ventilsäcke, mit einem Fülltrichter, einem sich an den Auslauf des Fülltrichters in lotrechter Achsrichtung anschließenden Fallrohr und einer im Bereich des Fülltrichters vorgesehenen Einrichtung zur Änderung des Einlaufquerschnittes sowie mit einem gummielastischen Abschnitt im Fallrohr.

Es ist bekannt, Absack- oder Schlauchfolienfüllvorrichtungen mit Fallrohren auszurüsten, um das in den Sack oder die Folienpackung zu überführende Gut durch kleine Einlaßöffnungen einbringen zu können. Dieses Problem tritt insbesondere beim Füllen von Ventilsäcken auf.

Um das Füllgut möglichst schnell durch den im allgemeinen im Querschnitt gering bemessenen Fallrohrausgang in den Sack oder die Folienpackung zu überführen wird es im Fallrohr durch dessen senkrechte Anordnung, also aufgrund der Schwerkraft, beschleunigt. Die den Teilchen auf diese Weise mitgegebene kinetische Energie wird teilweise beim Durchtreten des Ventils verbraucht. Je höher die Geschwindigkeit der Teilchen ist, desto mehr können in einem bestimmten Zeitraum in den Sack bzw. die Folienpackung eingebracht werden, da deren Einlaßöffnung im Querschnitt vorgegeben ist.

Zur Erhöhung der Geschwindigkeit steht als einzige realistische Maßnahme eine Verlängerung des Fallrohres zur Verfügung, wobei der Größenordnung dieser Maßnahme natürliche Grenzen gesetzt sind.

Umso wichtiger ist es, daß die volle Höhe des Fallrohres ausgenutzt wird und sich das Füllgut nicht innerhalb des Fallrohres verklemmt oder staut und Brücken bildet. Aus diesem Grunde werden Fallrohre möglichst knickfrei ausgebildet. Kommt es erst einmal zu einem Stau im Fallrohr, so wird die Füllzeit eines Sackes oder einer Folienpackung um ein Beträchtliches verlängert. Die Geschwindigkeit der fallenden Teilchen wird nämlich bei einem Stau auf praktisch Null reduziert, so daß sie auch bei einem sich auflösenden Stau erst wieder durch die Schwerkraft über die verbleibende Strecke neu beschleunigt werden müssen. Die dabei erreichte Geschwindigkeit ist erheblich geringer als bei freiem Fall über die gesamte Höhe des Fallrohres.

Die Wahrscheinlichkeit, daß es zu einem Stau kommt, hängt auch von den Eigenschaften des Füllgutes ab, beispielsweise von seiner Rieselfähigkeit, seinem Feuchtigkeitsanteil, seinem Luftwiderstand pro Teilchen sowie weiteren Parametern. In einem Fallrohr kommt es dann zum Stau, wenn zuviele Teilchen gleichzeitig einen bestimmten Querschnitt passieren wollen. Dies wiederum passiert dann, wenn - abhängig von der Art des Füllgutes - der Einlaufquerschnitt im Verhältnis zum Rohrquerschnitt des Fallrohres an einem beliebigen Punkt in seinem Bereich unterhalb des Einlaufquerschnittes zu groß ist. Der Einlaufquerschnitt sollte also variabel sein, da sich die Parameter des Füllgutes von Tag zu Tag ändern können, selbst wenn mit einem Fallrohr stets das gleiche Produkt abgefüllt wird, z.B. Weizen. Abhängig von beispielsweise Feuchtigkeit kann ein an einem Tag optimaler Einlaufquerschnitt bereits beim nächsten Füllvorgang zu groß sein und Verstopfungen bewirken. Um zu verhindern, daß sich demnach Füllgut innerhalb des Fallrohres verklemmt oder staut und Brücken bildet, werden derartige Fallrohre, die vielfach zum Auslaufende hin konisch verjüngt ausgebildet sind, mit Einrichtungen zur Änderung des Einlaufquerschnittes ausgerüstet. Als derartige Einrichtungen sind im Inneren des Rohrmantels bzw. in Höhe des Einlaufquerschnittees vorgesehene höhenverstellbare Kegel bekannt, beispielsweise aus der US-PS 1 887 733. Je nach Eintauchtiefe des Kegels in das Fallrohr wird der Zulaufquerschnitt für das Füllgut entsprechend verändert, da die Querschnittsfläche des Kegels für den Einlauf des Füllgutes nicht mehr zur Verfügung steht.

Diese bekannte Ausbildung hat den Nachteil, daß die Form des Verstellquerschnittes im Fallrohreingang nicht mehr der Form des Rohrquerschnittes, insbesondere im Bereich des Rohrauslaufes, entspricht. Hierdurch gelangt das Fördergut mit den inneren Mantelflächen des Fallrohres in Berührung. Die dadurch bedingte Reibung des Gutes an den Rohrwandungen führt zu örtlichen Störungen des Gutflusses durch Verwirbelungen und bedingt auch Leistungsverluste beim Füllen der Säcke oder Beutel. Außerdem ist diese Einrichtung zur Änderung des Einlaufquerschnittes des Fallrohres sehr aufwendig in ihrer Herstellung und insbesondere bei ihrer Verwendung, da Maßnahmen getroffen werden müssen, um den mitten im Strom oberhalb des Fallrohres befindlichen Kegel zu verstellen. Es muß also im Bereich oberhalb des Fülltrichters eingegriffen werden.

Als Verbesserung ist in der DE-A- 24 25 491 vorgeschlagen worden, daß sich an den Fülltrichter ein gummielastisches rohrförmiges Zwischenstück anschließt mit einer das Zwischenstück umschließenden Eindrückeinrichtung, welche so ausgebildet und betätigbar ist, daß sie in ihrer wirksamen Stellung den Einlaufquerschnitt konzentrisch einschnürt. Bei dieser Lösung entstehen Probleme mit dem gummielastischen Zwischenstück. Durch die konzentrischen Einschnürungen der Rohrform bilden sich Falten, und es entsteht wiederum kein stabiler Fluß des Materials, vielmehr werden durch die Faltenbildungen erneut Randberührungen des fließenden Stromes erzeugt.

Außerdem bildet sich oberhalb der konzentrischen Einschnürung automatisch ein Stau, so daß nicht mehr die volle Höhe des Fallrohres für die Beschleunigung der Teilchen ausgenutzt werden kann.

Aufgabe der Erfindung ist es, demgegenüber eine Absack- oder Schlauchfolienfüllvorrichtung der eingangs beschriebenen Art (nach der DE-A 2 425 491) vorzuschlagen, bei der mit geringem baulichem Aufwand eine noch günstigere Möglichkeit zur Füllung von Säcken, insbesondere zum Abfüllen von rieselfähigem Gut in Ventilsäcke, gegeben wird.

Diese Aufgabe wird dadurch gelöst, daß der gummielastische Abschnitt eine Düsenform nach Art eines austrittsseitig verkürzt abgeschnittenen Hyperboloids besitzt, zwischen dem Fülltrichter und dem Fallrohr angeordnet ist, und daß der Öffnungswinkel des gummielastischen Abschnittes mittels einer Einstellvorrichtung veränderbar ist, welche die Einrichtung des Einlaufquerschnittes bildet.

Mit einer solchen Konstruktion kann bereits der Einfülltrichter mit dem anschließenden Übergangsbereich zur Steigerung der Fallgeschwindigkeit ausgenutzt werden, da der Übergangsbereich durch die Einstellvorrichtung den optimalen Bedingen angepaßt werden kann.

Die etwa hyperbolische Form des gummielastischen Abschnittes verhindert eine Faltenbildung und ermöglicht so die problemlose Einstellbarkeit des Öffnungswinkels. Dieser Winkel kann an die Trichterform des Fülltrichters angepaßt werden und so über die Elastizität des Abschnittes einen gleichmäßigen Übergang der Fallrohrwandung in die Lotrechte gewährleisten.

Durch Variierung des Öffnungswinkels kann erreicht werden, daß stets die optimale Menge Füllgut pro Zeit in das Fallrohr eintritt, so daß es zu keiner Staubildung kommt.

Der Öffnungswinkel kann besonders zweckmäßig dadurch eingestellt werden, daß der engste Querschnitt des gummielastischen Abschnittes entweder in seinem Durchmesser oder in seiner Lage verändert wird, wobei auch Kombinationen aus beidem denkbar sind.

Die Elastizität des Abschnittes sorgt dafür, daß bei den Einstellungen die etwa hyperbolische Form gewahrt bleibt. Wird der engste Querschnitt verjüngt, so führt dies zu einer Erweiterung des Öffnungswinkels. Das gleiche tritt ein, wenn die Lage dieses engsten Querschnittes in Achsrichtung nach oben verschoben wird.

Eine bevorzugte Ausführungsform zeichnet sich dadurch aus, daß die Einschnüreinrichtung einen in vertikaler Richtung verschiebbaren konzentrischen Ring um den gummielastischen Abschnitt aufweist, dessen Innendurchmesser den geringsten Querschnitt des gummielastischen Abschnittes festlegt.

Ein solcher Ring kann durch einfaches Aufwärts- bzw. Abwärtsschieben seinen vorgegebenen Innendurchmesser dem gummielastischen Abschnitt als Außendurchmesser aufprägen. Der so entstehende Querschnitt kann nun an eine beliebige Stelle gelegt werden, wodurch sich aufgrund der Hyperboloidform des Abschnittes automatisch eine der idealen Wandkrümmung angenäherte Krümmung ausbildet.

Ein zusätzlicher Vorteil entsteht insbesondere dadurch, daß bei der Vertikalverschiebung auf einfachste Weise eine Skalierung möglich ist. Auch wenig geschultes Personal ist dadurch in der Lage, bei auftretenden Verstopfungen diese sofort durch geeignetes Verschieben des Ringes bei weiteren Füllvorgängen zu verhindern. Umgekehrt ist bei rieselfähigem Gut mit bekannten physikalischen Eigenschaften die optimale Einstellung jederzeit reproduzierbar.

Außerdem ist es mit einer solchen Konstruktion möglich, die optimale Einstellung sehr fein zu wählen. Die Erfahrung zeigt, daß es dabei auf wenige Millimeter ankommen kann.

Eine weitere Möglichkeit wäre es, wenn die Einschnürvorrichtung einen den gummielastischen Abschnitt umgegebenden konzentrischen Ring aufweist, dessen Innendurchmesser variabel ist und den Außendurchmesser des engsten Querschnittes des gummielastischen Abschnittes festlegt.

Auf Einbauten in dem Produktstrom kann bei beiden Lösungen verzichtet werden, und es steht somit der volle Rohrquerschnitt des Fallrohres für das Gut zur Verfügung. Bedingt durch die Form des Abschnittes und insbesondere das Fehlen von Einbauten in dem Produktstrom wird zugleich verhindert, daß sich Klumpen an der Wandung festsetzen oder beispielsweise Sackbänder oder dgl. irgendwo anhängen und den Füllvorgang bei den jeweils folgenden Ventilsäcken behindern.

Durch die feine Einstellbarkeit kann die Füllvorrichtung sehr nahe an die Optimalstellung herangefahren werden. Dies ist bei bekannten Konstruktionen sehr kritisch, da unmittelbar neben der Optimalstellung bereits ein kritischer Bereich erreicht wird, bei dem es zu Verstopfungen kommt. Man ist daher bisher gezwungen, von dem optimalen Bereich einen Sicherheitsabstand zu wählen, damit es auf keinen Fall zu Verstopfungen kommen kann.

Bei praktischen Versuchen war es auf diese Weise möglich, die Füllzeit beispielsweise von 25 kg Kunststoffgranulat bei einem unteren Fallrohrdurchmesser von 80 mm und einer Rohrlänge von ca. 1.200 mm von größenordnungsmäßig 8 Sek. auf etwa 3 Sek. zu senken. Die reine Füllzeit ist zwar nur ein Teil der beim Abfüllen von Ventilsäcken benötigten Zeitspanne; hinzu kommen noch das jeweilige Auswechseln gefüllter Säcke gegen leere Säcke usw. Die prozentuale Zeitersparnis ist jedoch dennoch erheblich.

Im folgenden werden anhand der Zeichnung zwei Ausführungsbeispiele der Erfindung im einzelnen erläutert.

Es zeigen:

Fig. 1 eine schematische Darstellung einer ersten Ausführungsform der erfindungsgemäßen Vorrichtung,

Fig. 2 eine vergrößerte Darstellung des Übergangsbereiches vom Fülltrichter zum Fallrohr,

Fig. 3 eine Graphik zur Verdeutlichung der Abhängigkeit der Füllgeschwindigkeit des Ventilsacks von der Ringeinstellung und

Fig. 4 den Übergangsbereich vom Fülltrichter zum Fallrohr bei einer zweiten Ausführungsform.

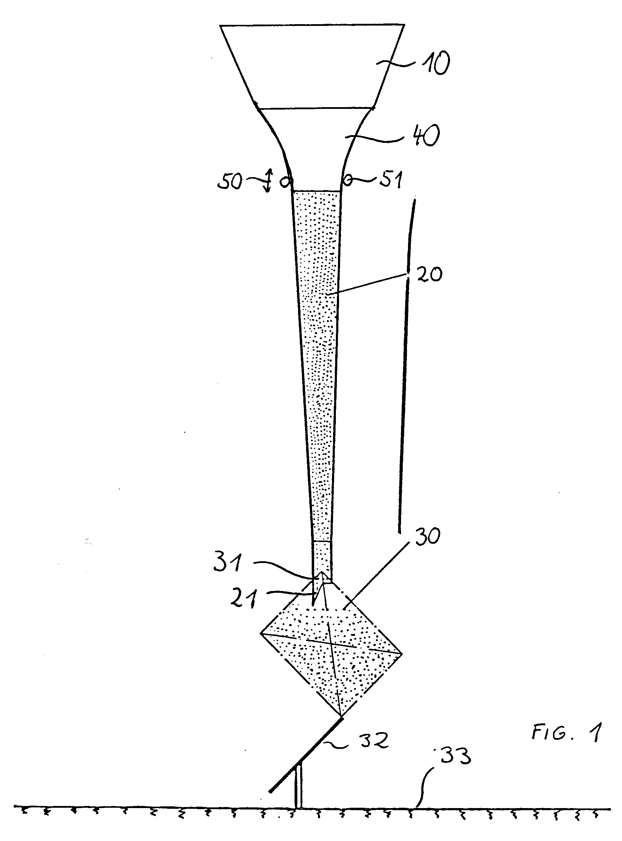

Im Beispiel der Fig. 1 sei angenommen, daß der Fülltrichter 10 unterhalb einer nicht dargestellten Waage oder anderen Dosiereinrichtung für das abzusackende Gut angeordnet ist.

Unterhalb des Fülltrichters 10 befindet sich ein vertikal lotrecht erstrecktes Fallrohr 20. Es besitzt einen im wesentlichen konstanten, kreisförmigen Querschnitt, der ggf. sich leicht konisch nach unten verengend ausgebildet ist, und besteht vorzugsweise aus einem starren Material, etwa Blech. Das Fallrohr 20 endet in einer Fallrohröffnung 21.

Ein Beutel oder Sack 30 besitzt eine Einfüllöffnung 31. Diese Öffnung ist ventilähnlich ausgebildet. Die Fallrohröffnung 21 führt in diese Einfüllöffnung 31. Die ventilähnliche Ausbildung der Einfüllöffnung 31 bedeutet, daß aus der Fallrohröffnung 21 fallende Teilchen möglichst problemlos in den Sack 30 hineingelangen können, daß aber nach Füllung des Sackes 30 durch die Teilchen selbst vorgesehene Plastiklaschen im Inneren des Sackes 30 so gegeneinandergedrückt werden, daß möglichst wenig Füllgut aus dem Sack 30 gelangen kann.

Nach dem Füllen des Sackes 30 wird dieser von der Fallrohröffnung 21 getrennt und rutscht auf einer schematisch dargestellten Rutsche 32 auf ein Förderband 33. Mit nicht dargestellten Vorrichtungen kann nun der nächste leere Sack mit seiner Einfüllöffnung 31 an die Fallrohröffnung 21 angeschlossen werden. Währenddessen wird der gefüllte Sack 30 mit dem Förderband 33 abtransportiert.

Zwischen dem Fülltrichter 10 und dem Fallrohr 20 ist ein gummielastischer Abschnitt 40 angeordnet. Dieser Abschnitt 40 ist düsenförmig nach Art eines austrittsseitig verkürzt abgeschnittenen Hyperboloids. Er besitzt über seine vertikale Ausdehnung jeweils einen kreisförmigen Querschnitt. Dieser Querschnitt ist am oberen Ende größer als am unteren. Das obere Ende 41 des Abschnittes 40 ist auf dem unteren Ende oder in der Nähe des Fülltrichters 10 festgelegt bzw. festgespannt. Das untere Ende 42 des Abschnittes 40 ist um das obere Ende des Fallrohres 20 gespannt.

Um den Abschnitt 40 herum ist eine Einstelleinrichtung 50 vorgesehen. Kernstück der Einrichtung 50 ist ein Ring 51, der den Abschnitt 40 konzentrisch umgibt. Der Innendurchmesser 51 legt den engsten Querschnitt des gummielastischen Abschnittes 40 fest.

Der Ring 51 kann in vertikaler Richtung verstellt werden. Zu diesem Zweck sind eine oder mehrere Spindeln 52 vorgesehen. An diesen Spindeln 52 kann der Ring 51 arretiert werden. Durch Losdrehen und Verstellen kann er in vertikale Richtung nach oben bzw. nach unten verschoben werden.

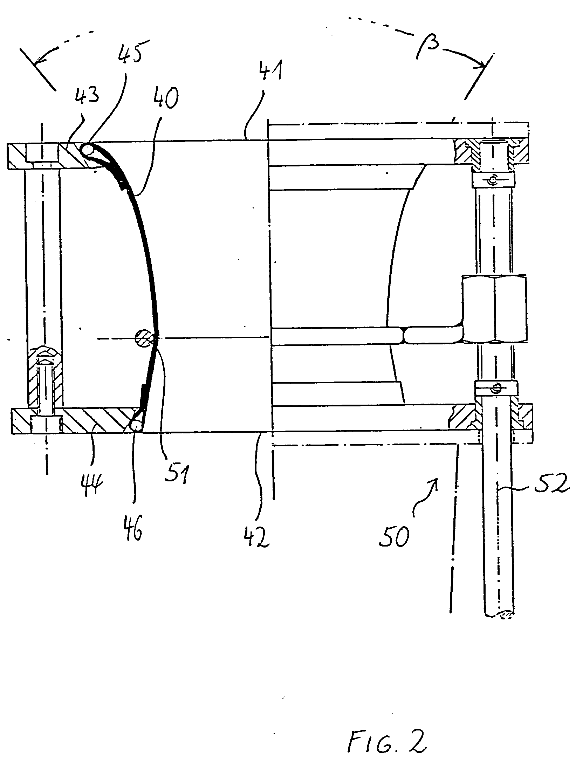

Die Einzelheiten dieses Bereiches sind besonders in Fig. 2 zu erkennen. Dort ist links ein Schnitt und rechts eine teilweise geschnittene Ansicht dieses Bereiches zwischen Fülltrichter 10 und Fallrohr 20 zu erkennen.

Im Schnitt auf der linken Seite der Fig. 2 ist zu erkennen, daß der gummielastische Abschnitt sich zwischen zwei parallel zueinander liegenden ringförmigen Platten 43 und 44 erstreckt. Dabei ist er mit je einer oben und unten umlaufenden Schlaufe an ebenfalls umlaufenden Nasen 45 und 46 festgespannt. Zwischen diesem oberen Ende 41 und dem unteren Ende 42 ist der Ring 51 angeordnet. Er legt den Ort fest, an dem sich der geringste Durchmesser und damit die geringste Querschnittsfläche des gummielastischen Abschnittes 40 befindet. Sowohl nach oben als auch nach unten erweitert sich der Querschnitt des Abschnittes 40. Dadurch erhält der Abschnitt eine hyperboloidähnliche Form, die jedoch unten verkürzt ist.

Der Ring 51 drückt den Außendurchmesser des Abschnittes 40 auf ein Ausmaß zusammen, der seinem eigenen Innendurchmesser entspricht. Da das Zwischenstück 40 gummielastisch ist, nimmt es selbst die erwähnte hyperboloidartige Form an.

Je weiter der Ring 51 nach oben geschoben wird, desto größer wird der Öffnungswinkel $\beta$ des Abschnittes 40.

Befindet sich dagegen der Ring 51 in seiner untersten Stellung, so ist der Abschnitt 40 weitest möglich entlastet, und der Öffnungswinkel $\beta$ erreicht seinen geringsten Wert. Damit aber tritt besonders viel Füllgut in das Fallrohr 20 ein.

Theoretische Grundlage für die Erfindung ist folgende Überlegung zum optimalen Durchsatz durch ein Fallrohr 20. Der Durchsatz durch ein Rohr ist das Produkt aus Querschnittsfläche und aktueller Geschwindigkeit, wobei für die Querschnittsfläche die üblichen Kreisformeln gelten. Beim freien Fall ergeben sich bei Vernachlässigung des Luftwiderstandes die bekannten Größen $v^2$ = 2gs. Als idealisierte Formel für den zu schaffenden Mindestdurchmesser D erhält man

$$\textcircled{D} = \sqrt{\frac{2\sqrt{2}}{\pi} * \frac{Q}{g \cdot s}}$$

Hier erkennt man, daß der Mindestrohrdurchmesser D nur noch vom Volumendurchsatz Q und der Fallhöhe s abhängt.

Bei Schüttgütern verläuft dar Fallvorgang nicht reibungsfrei, insbesondere nicht ohne Luftwiderstand. Tendenziell führt dies zu einer Durchmesservergrößerung in einer Größenordnung von etwa 15%.

Der oben erwähnte engste Querschnitt des gummielastischen Abschnittes 40 ist für das Verhalten des Füllgutes sehr wesentlich. Im Fallrohr 20 darf bei weiterem Fallen der Querschnitt niemals wieder enger werden, als die oben erwähnte Formel angibt.

Wird der engste Querschnitt zu hoch gelegt, wird die Füllzeit verlängert, weil der Produktstrom gedrosselt ist und nicht soviel Füllgut gleichzeitig gefördert wird, wie es theoretisch möglich wäre.

Liegt der engste Querschnitt dagegen zu tief, wird der Füllgutstrom zu groß und das Fallrohr 20 verstopft.

Der optimale Wert läßt sich durch eine Lageverschiebung des Ringes 51 nach oben bzw. unten erreichen und auf diese Weise die kürzeste Füllzeit einstellen. Experimentelle Versuche haben dabei ergeben, daß es auf Verschiebungen von 5 mm Genauigkeit ankommt.

Dabei ist zu beachten, daß selbst bei stets gleichem Füllgut die Rieselfähigkeit dieses Gutes, beispielsweise aufgrund von Feuchtigkeit oder geringfügig veränderter Korngröße, sehr verändert werden kann. Würde sich etwa die Rieselfähigkeit nur geringfügig verschlechtern, so kann es bei unverändertem Querschnitt sehr rasch zu Verklumpungen im Fallrohr 20 kommen, da die gleiche Anzahl Teilchen gleichzeitig den nun zu geringen Querschnitt passieren will. Dies geht aber nur, wenn die Teilchen an diesem Ort bereits eine Mindestgeschwindigkeit überschritten haben. Falls dies nicht der Fall ist, tritt unmittelbar ein Stau auf.

Um nun bei weiteren Füllvorgängen diesen Stau zu verhindern, wird der Ring 51 nach oben verschoben. Aus dem Fülltrichter 10 können dann nur weniger Teilchen gleichzeitig den gummielastischen Abschnitt 40 passieren; denn aufgrund des nun höherliegenden engsten Querschnittes kann bei der dort noch niedrigeren Geschwindigkeit der Teilchen auch nur eine geringere Teilchenzahl passieren.

Ist der Ring 51 weit genug nach oben verschoben, tritt beim weiteren freien Fallen kein Stau mehr auf, da nun die oben erwähnte Formel zum Mindestquerschnitt des Fallrohres stets erfüllt ist. Der Sack 30 kann nun staufrei problemlos gefüllt werden. Die Füllgeschwindigkeit ist in diesem Falle zwar langsamer als bei ganz nach unten geschobenem Ring 51 bei problemlos rieselfähigem Gut, aber beträchtlich schneller als bei Auftreten auch nur eines einzigen Staues.

Als praktische Ausführung wird der oben und unten eingespannte elastische Abschnitt als Gummischlauch gewählt und besitzt oben ca. 200 mm und unten ca. 140 mm Durchmesser bei ca. 150 mm vertikal erstreckter Länge.

Der verschiebbare Ring 51 kann etwa 140 mm Innendurchmesser besitzen. Er schnürt den gummielastischen Abschnitt 40 von außen etwas ein und ermöglicht die Einstellung des optimalen Durchsatzes. Dieser Ring 51 kann in entsprechender Position festgelegt werden, um unbeabsichtigtes, etwa durch Vibrationen bedingtes Verschieben zu vermeiden.

Bei größerer Dimensionierung kann die Füllzeit natürlich entsprechend vergrößert werden, wobei dann aber auch eine Vergrößerung des Fallrohres bzw. eine Verlängerung vorgenommen werden müßte.

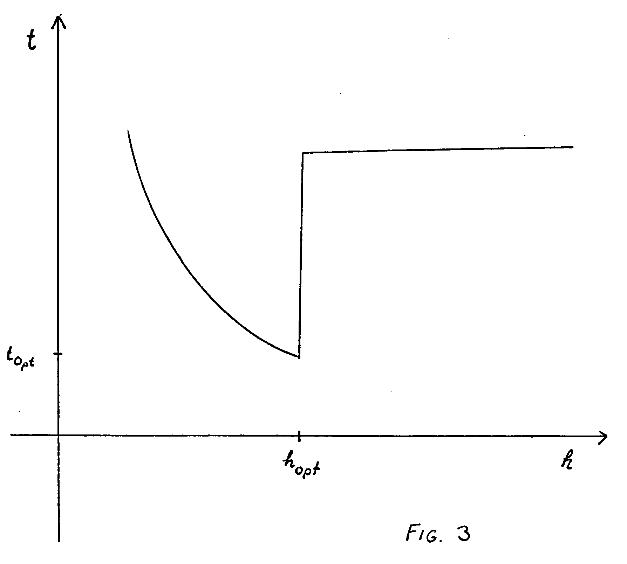

Der mit der Erfindung erzielbare vorteilhafte Effekt wird insbesondere aus der in Fig. 3 dargestellten Graphik deutlich: Aufgetragen ist nach rechts die eingestellte Höhe h des Ringes 51, wobei h der Abstand des Ringes vom oberen Ende des gummielastischen Abschnittes 40 ist. Auf der Abszisse ist die für die Füllung des Ventilsacks benötigte Zeit t eingetragen.

Deutlich ist zu erkennen, daß beim Herabschieben des Ringes 51, also beim Vergrößern von h und damit beim Verringern des Öffnungswinkels $\beta$, die benötigte Füllzeit zunächst abnimmt. Dies setzt sich fort bis zu einer bestimmten Position des Ringes 51, an der ein Stau auftritt und keine weitere Senkung der Fülldauer mehr möglich ist. Dies ist der Fall bei der Höhe $h_{opt}$, bei der eine Fülldauer von $t_{opt}$ erreicht wird. Unmittelbar nach Überschreiten dieser Position tritt eine erhebliche Verlängerung der Fülldauer aufgrund der dann eintretenden Staus ein. Die Einstellung sollte also mit dem Ring möglichst dicht an diese optimale Position herangefahren werden, was mit der Erfindung sehr fein möglich ist.

Die oben erwähnte physikalische Formel für den Durchmesser legt bei genauer Betrachtung eine Paraboloidform für den gummielastischen Abschnitt nahe. Es ist jedoch zu bedenken, daß es sich um den Mindestdurchmesser handelt, so daß auch die erfindungsgemäße Hyperboloidform den Bedingungen genügt. Dabei ist zu beachten, daß eine Paraboloidform nur ein Sonderfall einer Hyperboloidform ist.

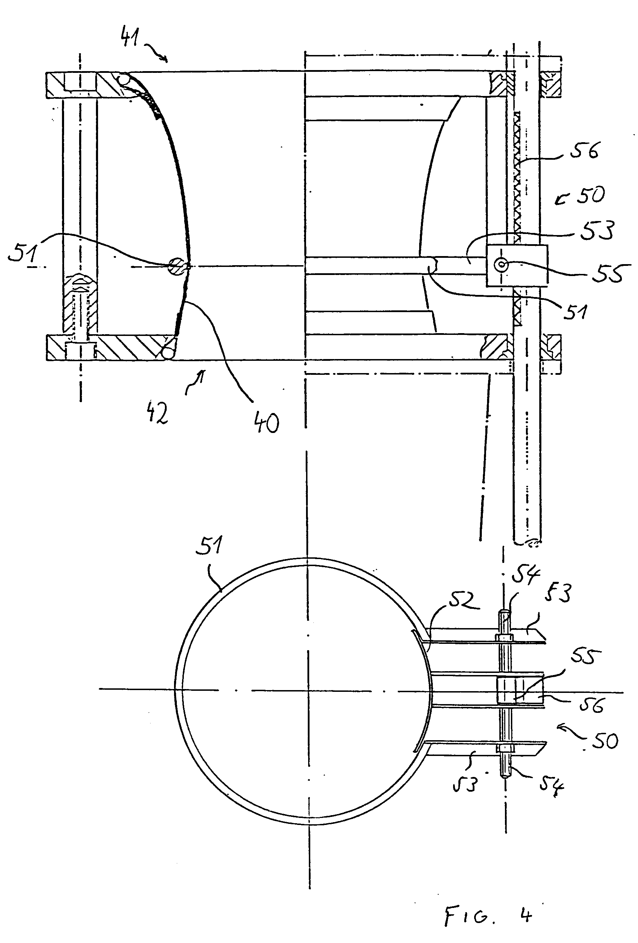

Bei einer zweiten, in Fig. 4 näher dargestellten Ausführungsform wird die Lage des Ringes 51 in ihrer Höhe unverändert gelassen und stattdessen der Innendurchmesser des Ringes 51 verändert. Dies ist konstruktiv etwas aufwendiger, zeigt aber im wesentlichen den gleichen Effekt. Bei Verjüngung des engsten Querschnittes des gummielastischen Abschnittes 41 durch Verringerung des Ringdurchmessers wird nur eine geringe Teilchenzahl ins Fallrohr 20 pro Zeit passieren, auf diese Weise zwar die Füllgeschwindigkeit grundsätzlich herabsetzen, aber so auch einer Staubildung entgegenwirken. Die optimale Einstellung kann das Bedienungspersonal füllgutabhängig wählen.

Fig. 4 zeigt dabei neben einem Vertikalschnitt ähnlich der Fig. 2 außerdem einen horizontalen Schnitt in Höhe des Ringes 51. Um den Durchmesser des Ringes 51 verändern zu können, ohne daß etwa die Kreisform unterbrochen würde, ist ein Kreisabschnittbogen 52 vorgesehen, der einen offenen Kreisabschnitt des Ringes 51 verdeckt.

Der Ring 51 ist in diesem Falle nicht geschlossen, sondern er läuft in zwei Halteblechen 53 aus. Diese Haltebleche 53 sind parallel zueinander und können aufeinander zu gezogen werden, wodurch der Durchmesser des Ringes 51 verringert wird. Dieses Aufeinanderzuziehen erfolgt durch eine die beiden Haltestangen 53 miteinander verbindende drehbare Stange mit je einem Rechts- und einem Linksgewinde 54. Auf dieser Stange sitzt fest ein Zahnrad 55. Das Zahnrad 55 wird durch eine Zahnstange 56 in Drehung versetzt. Diese Zahnstange 56 ist vertikal verschiebbar und dadurch für das Bedienungspersonal besonders leicht in ihrer Wirkung erkennbar.

Grundsätzlich besteht auch die Möglichkeit, gemäß einer anderen nicht dargestellten Ausführungsform nicht einen den gummielastischen Abschnitt umschließenden konzentrischen Ring vorzusehen, mit dem eine Verengung oder Einschnürung vorgenommen oder verlagert wird, sondern statt dessen eine Spannvorrichtung vorzusehen, mit der im unteren Bereich des gummielastischen Abschnittes dieser auseinandergezogen werden kann. Durch die Materialverschiebung kann dadurch eine Verkleinerung des Öffnungswinkels des Hyperboloids im oberen Bereich des gummielastischen Abschnittes erfolgen.

## Patentansprüche

1. Absack- oder Schlauchfolienfüllvorrichtung für rieselfähiges Gut, insbesondere zum Abfüllen in Ventilsäcke (30), mit einem Fülltrichter (10), einem sich an den Auslauf des Fülltrichters (10) in lotrechter Achsrichtung anschließenden Fallrohr (20) und einer im Bereich des Fülltrichters (10) vorgesehenen Einrichtung (50) zur Änderung des Einlaufquerschnittes sowie mit einem gummielastischen Abschnitt (40) im Fallrohr (20), **dadurch gekennzeichnet**, daß der gummielastische Abschnitt (40) eine Düsenform nach Art eines austrittsseitig verkürzt abgeschnittenen Hyperboloids besitzt, zwischen dem Fülltrichter (10) und dem Fallrohr (20) angeordnet ist, und daß der Öffnungswinkel ($\beta$) des gummielastischen Abschnittes (40) mittels einer Einstellvorrichtung (50) veränderbar ist, welche die Einrichtung zur Änderung des Einlaufquerschnittes bildet.

2. Vorrichtung nach Anspruch 1, **dadurch gekennzeichnet,** daß die Einstellvorrichtung (50) zur Veränderung des Öffnungswinkels ($\beta$) des gummielastischen Abschnittes (40) eine Einschnürungseinrichtung aufweist, die den gummielastischen Abschnitt (40) umgibt und Ort und Durchmesser des engsten Querschnittes des gummielastischen Abschnittes (40) festlegt.

3. Vorrichtung nach Anspruch 2, **dadurch gekennzeichnet**, daß die Einschnüreinrichtung einen in vertikaler Richtung verschiebbaren konzentrischen Ring (51) um den gummielastischen Abschnitt (40) aufweist, dessen Innendurchmesser den geringsten Querschnitt des gummielastischen Abschnittes (40) festlegt.

4. Vorrichtung nach einem der vorstehenden Ansprüche, **dadurch gekennzeichnet**, daß die Einschnürvorrichtung einen den gummielastischen Abschnitt (40) umgebenden konzentrischen Ring (51) aufweist, dessen Innendurchmesser variabel ist und den Außendurchmesser des engsten Querschnittes des gummielastischen Abschnittes (40) festlegt.

## Claims

1. Device for filling sacks or tubular film with pourable material, in particular for filling valve sacks (30), having a feeding funnel (10), a drop leg (20) adjoining the outlet of the feeding funnel (10) in a vertical axial direction and a device (50) provided in the region of the feeding funnel (10) for altering the inlet cross section as well as having a rubber-elastic portion (40) in the drop leg (20), **characterized in that** the rubber-elastic portion (40) has a nozzle shape in the manner of a hyperboloid truncated at the outlet end, is disposed between the feeding funnel (10) and the drop leg (20), and that the approach angle ($\beta$) of the rubber-elastic portion (40) is variable by means of an adjusting device (50) which forms the device for altering the inlet cross section.

2. Device according to claim 1, **characterized in that** the adjusting device (50) for varying the approach angle ($\beta$) of the rubber-elastic portion (40) comprises a necking device which surrounds the rubber-elastic portion (40) and determines the location and diameter of the narrowest cross section of the rubber-elastic portion (40).

3. Device according to claim 2, **characterized in that** the necking device comprises a vertically displaceable concentric ring (51) around the rubber-elastic portion (40), the internal diameter of said ring determining the smallest cross section of the rubber-elastic portion (40).

4. Device according to one of the preceding claims, **characterized in that** the necking device comprises a concentric ring (51) surrounding the rubber-elastic portion (40), the internal diameter of said ring being variable and determining the external diameter of the narrowest cross section of the rubber-elastic portion (40).

**Revendications**

1. Dispositif d'ensachage ou de remplissage de feuilles tubulaires pour un produit coulant, notamment en vue du déversement dans des sacs (30) munis de valves, comprenant un entonnoir d'emplissage (10), un tube de descente (20) se rattachant à la sortie de l'entonnoir d'emplissage (10) dans le sens axial vertical, et un système (50) prévu dans la région de l'entonnoir d'emplissage (10) pour faire varier la section d'entrée, ainsi qu'une zone (40) douée de l'élasticité du caoutchouc et située dans le tube de descente (20), caractérisé par le fait que la zone (40) douée de l'élasticité du caoutchouc revêt la forme d'une buse, à la manière d'un hyperboloïde tronqué raccourci côté sortie, et est interposêe entre l'entonnoir d'emplissage (10) et le tube de descente (20) ; et par le fait que l'angle d'ouverture ($\beta$) de la zone (40) douée de l'èlasticité du caoutchouc peut être modifié au moyen d'un dispositif de réglage (50) qui forme le système pour faire varier la section d'entrée.

2. Dispositif selon la revendication 1, caractérisé par le fait que le dispositif de réglage (50), conçu pour modifier l'angle d'ouverture ($\beta$) de la zone (40) douée de l'élasticité du caoutchouc, présente un système de resserrement qui entoure la zone (40) douée de l'élasticité du caoutchouc, et fixe l'emplacement et le diamètre de la section transversale la plus étroite de cette zone (40) douée de l'élasticité du caoutchouc.

3. Dispositif selon la revendication 2, caractérisé par le fait que le système de resserrement comporte, autour de la zone (40) douée de l'élasticité du caoutchouc, une bague concentrique (51) qui peut coulisser dans le sens vertical et dont le diamètre interne fixe la section transversale la plus faible de la zone (40) douée de l'élasticité du caoutchouc.

4. Dispositif selon l'une des revendications précédentes, caractérisé par le fait que le système de resserrement comporte une bague concentrique (51) qui entoure la zone (40) douée de l'élasticité du caoutchouc, et dont le diamètre interne est variable et fixe le diamètre externe de la section transversale la plus étroite de la zone (40) douée de l'élasticité du caoutchouc.

FIG. 1

FIG. 2

FIG. 3

FIG. 4